# EUROPÄISCHE PATENTSCHRIFT

(11) **EP 0 502 320 B1**
(45) Veröffentlichungstag und Bekanntmachung des Hinweises auf die Patenterteilung: **12.04.1995**
(21) Anmeldenummer: 92101665.5
(22) Anmeldetag: 01.02.1992
(51) Int. Cl.: B60J 7/10, B60J 7/12

(54) **Verdeckbefestigung an Cabriolet-Fahrzeugen**
Mounting of hood for cabriolet
Fixation de capote pour cabriolet

(30) Priorität: 23.02.1991 DE 9102150 U
(43) Veröffentlichungstag der Anmeldung: 09.09.1992
(73) Patentinhaber: Wilhelm Karmann GmbH, D-49084 Osnabrück (DE)
(72) Erfinder: Rothe, Karl, W-4550 Bramsche (DE)
(74) Vertreter: Busse & Busse Patentanwälte

(56) Entgegenhaltungen:
- EP-A- 0 332 810
- DE-A- 3 903 680
- DE-B- 1 192 529
- DE-U- 9 102 147
- GB-A- 2 141 389

## Beschreibung

Die vorliegende Erfindung bezieht sich auf eine Verdeckbefestigung an Cabriolet-Fahrzeugen gemäß dem Oberbegriff des Anspruchs 1.

Bei einer bekannten Verdeckbefestigung dieser Art (DE-C-1 192 529) ist der Verdeckstoff in einer als Befestigungsrinne ausgebildeten Befestigungsausformung durch ein von außen aufgelegtes Spannglied gehalten, mit dem der Verdeckstoff in Form einer Schleife in die Befestigungsrinne hineingezogen wird. Diese im hinteren Teil des Fahrzeuges am oberen Karosserierand sichtbar angeordnete Verdeckbefestigung bildet einen feuchteempfindlichen Stauraum, da die Befestigungsrinne nur durch eine Verdeckwulst abgedeckt ist. Mit der unmittelbaren Auflage des als Spanndraht ausgebildeten Spanngliedes auf die Schleife des Verdeckstoffes sind mit den notwendigen Spannkräften im Bereich der Befestigungsausformung nachteilige Kerbwirkungen verbunden, die den Verdeckstoff randseitig schädigen können.

Der Erfindung liegt die Aufgabe zugrunde, eine Verdeckbefestigung zu schaffen, die einfach montierbar ist und eine zugfeste, zuverlässig dichte Verbindung des Verdeckstoffes mit der Karosserie in optisch unauffälliger Befestigungslage erbringt.

Die Erfindung löst diese Aufgabe durch eine Verdeckbefestigung an Cabriolet-Fahrzeugen mit den Merkmalen des Anspruchs 1. Hinsichtlich wesentlicher weiterer Ausgestaltungen wird auf die Ansprüche 2 bis 24 verwiesen.

Die Erfindung schafft eine Verdeckbefestigung an Cabriolet-Fahrzeugen, die aufgrund des mit dem Verdeckstoffrand wasserdicht verbundenen Klemmprofils mit dem integrierten Spannglied eine einfache Montage des Verdeckstoffes mit der Karosserie-Klemmleiste ermöglicht. In verspannter Verbindungsstellung wird der schleifenfrei am Klemmprofil gehaltene Verdeckstoffrand nur Zugbelastungen ausgesetzt, so daß mit dieser kerbwirkungsfreien Verspannung eine zuverlässig dichte Verbindung hergestellt ist. Die Verlagerung der Befestigungsausformung in den abgedeckten Karosserieschachtbereich verbessert mit einer nicht sichtbaren Verdeckbefestigung den optischen Gesamteindruck im hinteren Teil des Cabriolet-Fahrzeuges.

Hinsichtlich wesentlicher weiterer Vorteile und Einzelheiten der Erfindung wird auf die nachfolgende Beschreibung und auf die Zeichnung verwiesen, in der ein Ausführungsbeispiel des Gegenstandes der Erfindung schematisch näher veranschaulicht ist. In der Zeichnung zeigen:
- Fig. 1: eine perspektivische Teilansicht des hinteren Bereiches eines Cabriolet-Fahrzeuges mit einem Verdeck in geschlossenem Zustand,
- Fig. 2: eine erfindungsgemäße Verdeckbefestigung im hinteren Teil des Fahrzeuges nach einem Schnitt II-II in Fig. 1,
- Fig. 3: eine vergrößerte Schnitt-Darstellung einer Klemmleiste und eines Klemmprofils in Verbindungsstellung gemäß Fig. 2 mit genähter Verdeckstoffanbindung,
- Fig. 4: eine Darstellung gemäß Fig. 3 mit geschweißter Verdeckstoffanbindung,
- Fig. 5: die Klemmleiste gemäß Fig. 2 bis 4 in geschnittener Einzeldarstellung, und
- Fig. 6: das Klemmprofil gemäß Fig. 2 bis 4 in geschnittener Einzeldarstellung.

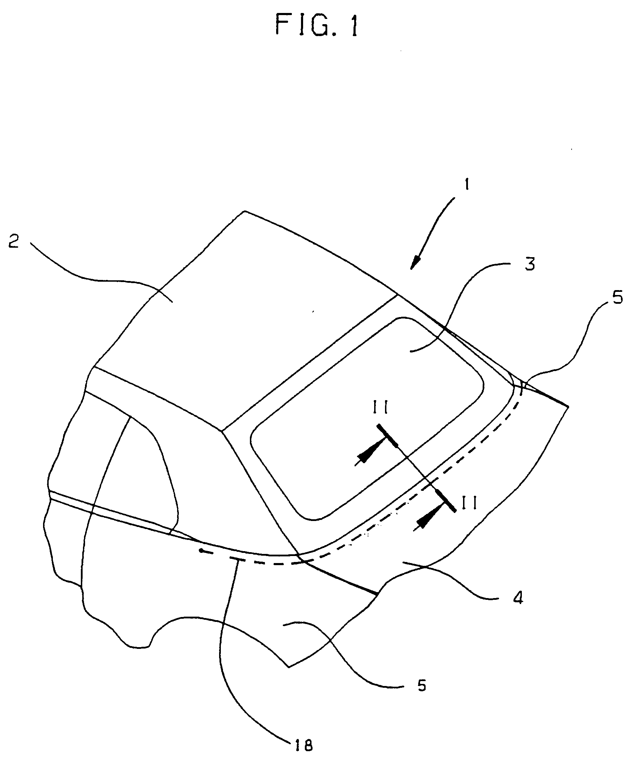

In Fig. 1 ist der insgesamt mit 1 bezeichnete hintere Teil des Cabriolet-Fahrzeuges mit einem geschlossenen Verdeckstoff 2 veranschaulicht, dessen Randbereich unterhalb eines Rückblickfensters 3 unter einen äußeren Kofferdeckel 4 und Karosserieseitenteile 5 abgesenkt und verdeckt gehalten ist.

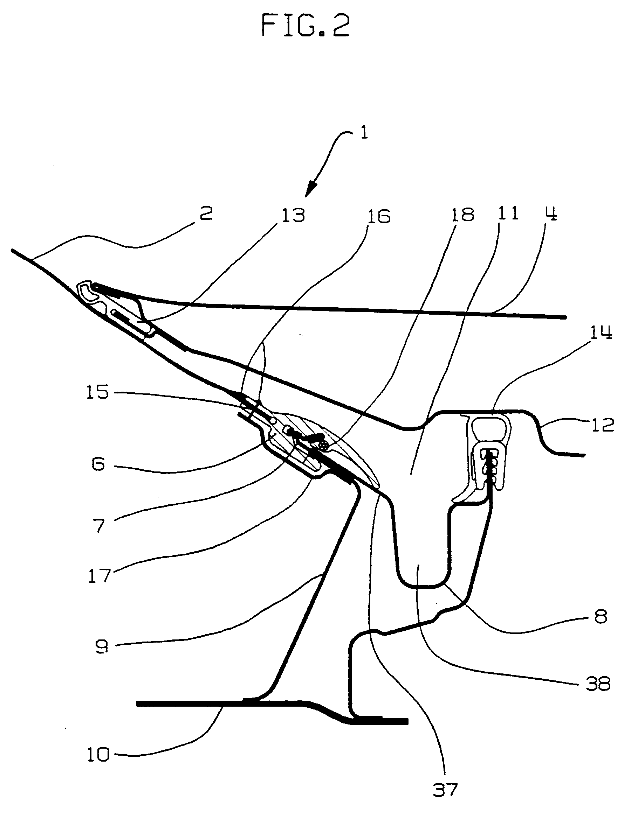

In Fig. 2 ist in einer geschnittenen Darstellung die Befestigung des Verdecksstoffes 2 im hinteren Teil 1 des Fahrzeuges verdeutlicht. Der Verdeckstoff 2 ist im Bereich seines Randes wasserdicht mit einem Klemmprofil 6 verbunden, das mit einer an Karosserieteilen gehaltenen Karosserie-Klemmleiste 7 verspannt ist. Dabei greift eine Befestigungsausformung am Klemmprofil 6 in eine entsprechende Gegenausformung an der Klemmleiste 7 ein. In zweckmäßiger Ausführungsform ist die Karosserie-Klemmleiste 7 zwischen parallelen Endbereichen eines Wasserkanalprofils 8 und eines Verdeckwannenbleches 9 verschweißt. Das am Brandschutzblech 10 abgestützte Verdeckwannenblech 9 ist schräg zum Verdeckstoff 2 hin verlängert und stützt in dem parallel überdeckten Endbereich das Wasserkanalblech 8 ab, das seinerseits einen Karosserieschacht 11 bildet, der von der inneren Kofferdeckelklappe 12 nach oben hin abgeschlossen ist. Der Kofferdeckel 4 ist dabei im Kontaktbereich zum Verdeckstoff 2 mit einer reibungsmindernden Karosserieabschlußdichtung 13 versehen, und die innere Kofferdeckelklappe 12 liegt auf einer den Karosserieschacht 11 begrenzenden hinteren Kofferdeckeldichtung 14 auf.

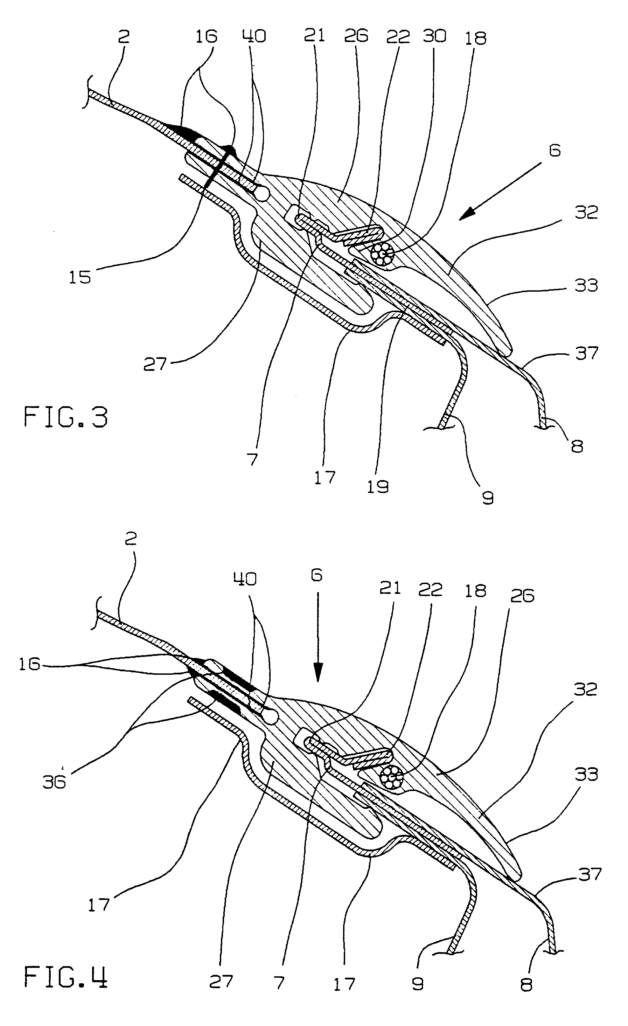

Wie insbesondere auch aus Fig. 3 ersichtlich, ist die Verbindung des Klemmprofils 6 mit dem Verdeckstoff 2 in der dargestellten Ausführungsform mit einer Naht 15 ausgeführt, in deren Bereich zumindest an der Oberseite des Verdeckstoffes 2 Dichtungsmittel 16 für einen wasserdichten Abschluß vorgesehen sind.

Zur Stabilisierung der Karosserie-Klemmleiste 7 im Verbindungsbereich mit dem Klemmprofil 6 ist unterhalb der sich parallel überdeckenden Endbereiche von Wasserkanalblech 8 und Verdeckwannenbleche 9 ein die Klemmleiste 7 untergreifendes zusätzliches Verstärkungsprofil 17 angeordnet, das in schräger Ausrichtung bis nahe an den Verdeckstoff 2 heranreicht.

In der dargestellten Verbindungsstellung von Karosserie-Klemmleiste 7 und Klemmprofil 6 ist der Verdeckstoff 2 dadurch straff gespannt, daß in das Klemmprofil 6 ein Spannglied 18 integriert ist, das den Verdeckstoff 2 über die gesamte Breite des hinteren Teils 1 des Fahrzeuges im Bereich des Kofferdeckels 4 und der Karosserieseitenteile 5 faltenfrei festlegt (Fig. 1).

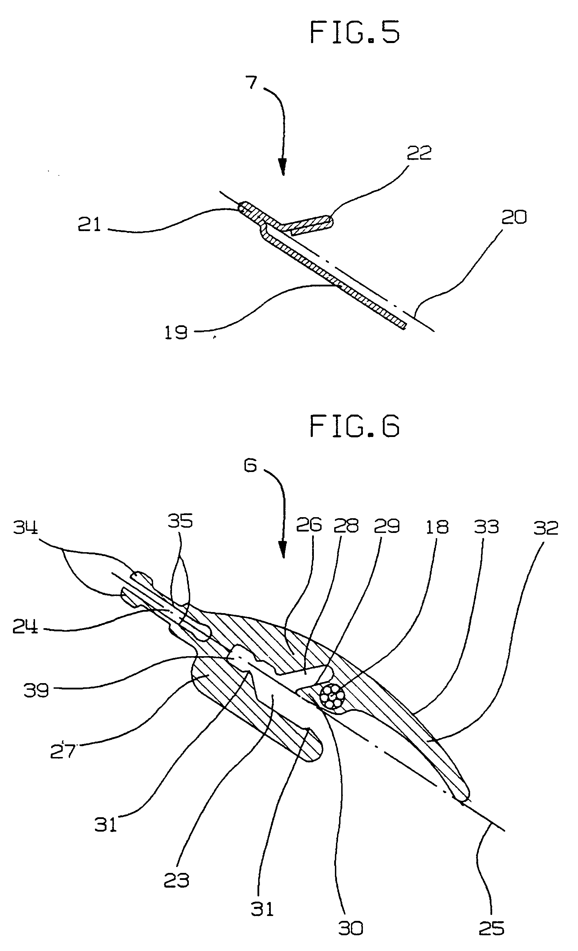

In Fig. 3 ist die verspannte Verbindungsstellung von Karosserie-Klemmleiste 7 und Klemmprofil 6 in vergrößerter Darstellung ausgeführt. Die Karosserie-Klemmleiste 7 ist dabei aus einem einstückigen Profilblech gebildet (Fig. 5), dessen dargestellte Querschnittsform einen ebenen Basisschenkel 19 aufweist, der zwischen den parallelen Endbereichen des Wasserkanalprofils 8 und Verdeckwannenbleches 9 aufgenommen ist. Zur Verbindungsherstellung mit dem Klemmprofil 6 weist die Karosserie-Klemmleiste 7 in einer zum Basisschenkel 19 parallelen Hauptlängsebene 20 (Fig. 5) einen vorderen doppellagig ausgebildeten Steckschenkel 21 und daran anschließend einen zur Hauptlängsebene 20 im spitzen Winkel zurückgebogene Rastnase 22 auf. Diese Rastnase 22 ist zur Erhöhung der Stabilität zweckmäßig ebenfalls doppellagig ausgeformt.

Das Klemmprofil 6 ist als eine einstückige elastische Kunststoffleiste ausgebildet, die einenends einen zur Klemmleiste 7 ausgerichteten Aufnahmeraum 23 und anderenends einen den Verdeckstoff 2 fixierenden Verbindungspalt 24 aufweist (Fig. 6). Der Aufnahmeraum 23 ist dabei beidseits einer Hauptlängsebene 25 von einem oberen Deckschenkel 26 und einem unteren Gegenschenkel 27 begrenzt. Am Deckschenkel 26 ist eine Aufnahmetasche 28 ausgeformt, in die der als Rastnase 22 ausgebildete Schenkel der Karosserie-Klemmleiste 7 eingreift. Diese Rastnase 22 liegt dabei an einer von einem Rasthaken 30 dargebotenen Anlagefläche 29 an, die im spitzen Winkel zur Hauptlängsebene 25 geneigt ist.

Der Deckschenkel 26 weist im Bereich des Rasthakens 30 das integrierte Spannglied 18 auf, das in vorteilhafter Ausführung als eingeformte Seileinlage vollständig in das, z.B. als PVC-Profil ausgebildete, Klemmprofil 6 integriert ist. An den Seilenden des Spanngliedes 18 (Fig. 1) sind entsprechende Ösen (nicht dargestellt) vorgesehen, die mit Blechschrauben an den Karosserieseitenteilen 5 befestigt sind. Mit einem derartig ausgebildeten Spannglied 18 in Form einer Seileinlage ist die Verbindung zwischen dem Klemmprofil 6 und der Karosserieklemmleiste 7 über die gesamte Klemmlänge stabilisiert, so daß Längenänderungen im Bereich der Verdeckstoffanbindung durch Temperaturschwankungen weitestgehend kompensiert sind und kein Verzug des Verdeckstoffes 2 auftritt.

Das Klemmprofil 6 gemäß Fig. 6 weist am Gegenschenkel 27 zum Aufnahmeraum 23 hin gerichtete Stützwülste 31 auf, die in Verbindungsstellung mit der Karosserie-Klemmleiste 7 das Klemmprofil 6 biegeelastisch abstützen, wobei eine Steckkammer 39 den Steckschenkel 21 zumindest teilweise in sich aufnimmt.

Der Deckschenkel 26 weist einen den Gegenschenkel 27 im wesentlichen um das doppelte überragenden Abdeckschutz 32 auf, der als elastischer Stützbogen mit einer gleichmäßig gewölbten Oberseite 33 ausgebildet ist, so daß die Verdeckbefestigung in der erfindungsgemäßen Ausführungsform keine Sammelräume für Feuchtigkeit darbietet.

Am Klemmprofil 6 sind an der dem Verdeckstoff 2 zugewandten Seite zwei symmetrische Verbindungsschenkel 34 ausgebildet, zwischen denen der Verbindungsspalt 24 gebildet ist. Die in dem Verbindungsspalt 24 befindlichen inneren Verbindungsflächen 35 sind dabei parallel ausgeformt, so daß der Verdeckstoff 2 zwischen diesen durch die Naht 15 (Fig. 3) oder durch eine Schweißnaht 36 (Fig. 4) gehalten ist, wobei zur weiteren Verbesserung der Dichtheit in den Verbindungsspalt 24 ein Schweißkleber 40 eingebracht sein kann.

Im Bereich der Eintrittsstelle des Verdeckstoffes 2 in den Verbindungsspalt 24 ist das Dichtmittel 16 zumindest an der Oberseite des Verdeckstoffes 2 derart aufgetragen, daß eine gegebenenfalls unter der Karosserieabschlußdichtung 13 (Fig. 2) eintretende Flüssigkeit über den Verbindungsbereich hinweg auf die Oberseite 33 des Klemmprofils 6 gelangt und von da aus über eine Einlaufschräge 37 in eine Querrinne 38 (Fig. 2) des Wasserkanalblechs 8 eingeleitet wird. Dieses Karosserieteil ist nach außen hin mit einer Ablauf-Öffnung (nicht dargestellt) verbunden, so daß keine Feuchtigkeit im Karosserieschacht 11 verbleibt.

Der Gegenstand der Erfindung ist nicht auf das in den Zeichnungen dargestellte und vorstehend beschriebene Ausführungsbeispiel beschränkt, sondern vielmehr sind im Rahmen der Ansprüche auch anderweitige Ausgestaltungen und Modifikationen denkbar.

## Patentansprüche

1. Verdeckbefestigung an Cabriolet-Fahrzeugen, mit einer zumindest im hinteren Teil des Fahrzeuges (1) an der Karosserie angeordneten Befestigungsausformung, in der der Verdeckstoff (2) im Bereich seines Randes mit einem Spannglied (18) aufgenommen ist, **dadurch gekennzeichnet,** daß eine die Befestigungsausformung aufweisende Karosserie-Klemmleiste (7) und ein mit dem Verdeckstoff (2) wasserdicht verbundenes Klemmprofil (6) mit integriertem Spannglied (18) in gegeneinander verspannter Verbindungsstellung in einem von Karosserieteilen (4,5) abgedeckten Karosserieschacht (11) angeordnet sind.

2. Verdeckbefestigung nach Anspruch 1, dadurch gekennzeichnet, daß die Klemmleiste (7) aus einem einstückigen Profilblech mit einer Querschnittsform besteht, die einen ebenen, an zumindest einem Halteblech (8,9) der Karosserie festlegbaren Basisschenkel (19) und einen von diesem randseitig ausgehend, einwärts auf den Basisschenkel (19) zurückgebogenen, einen Rastansatz bildenden Schenkel (21,22) umfaßt.

3. Verdeckbefestigung nach Anspruch 1 und 2, dadurch gekennzeichnet, daß die Klemmleiste (7) in einer zum Basisschenkel (19) parallelen Hauptlängsebene (20) einen vorderen doppellagigen ausgebildeten Steckschenkel (21) und daran anschließend eine zur Hauptlängsebene (20) im spitzen Winkel abgebogene Rastnase (22) aufweist.

4. Verdeckbefestigung nach Anspruch 3, dadurch gekennzeichnet, daß die Rastnase (22) doppellagig ausgeformt ist.

5. Verdeckbefestigung nach Anspruch 1 bis 4, dadurch gekennzeichnet, daß der Basisschenkel (19) der Klemmleiste (7) zwischen parallelen Endbereichen eines Wasserkanalprofils (8) und eines Verdeckwannenbleches (9) der Karosserie gehalten ist.

6. Verdeckbefestigung nach Anspruch 5, dadurch gekennzeichnet, daß im Befestigungsbereich unterhalb des Verdeckwannenbleches (9) ein die Klemmleiste (7) untergreifendes zusätzliches Verstärkungsprofilblech (17) angeordnet ist.

7. Verdeckbefestigung nach einem der Ansprüche 1 bis 6, dadurch gekennzeichnet, daß das Klemmprofil (6) aus einer einstückigen elastischen Kunststoffleiste mit einer zu einer mittleren Hauptlängsebene (25) vertikalen Querschnittsform besteht, die einenends einen zur Klemmleiste (7) gerichteten Aufnahmeraum (23) und anderenends einen den Verdeckstoffrand (2) fixierenden Verbindungsspalt (24) aufweist.

8. Verdeckbefestigung nach Anspruch 7, dadurch gekennzeichnet, daß der beidseits der Hauptlängsebene (25) gebildete Aufnahmeraum (23) von einem oberen Deckschenkel (26) und einem unteren Gegenschenkel (27) begrenzt ist.

9. Verdeckbefestigung nach Anspruch 7 oder 8, dadurch gekennzeichnet, daß am Deckschenkel (26) ein eine Aufnahmetasche (28) für die Rastnase (22) der Klemmleiste (7) bildender Rasthaken (30) ausgeformt ist.

10. Verdeckbefestigung nach einem der Ansprüche 7 bis 9, dadurch gekennzeichnet, daß der Rasthaken (30) eine Anlagefläche (29) darbietet, die im spitzen Winkel zur Hauptlängsebene (25) geneigt ist.

11. Verdeckbefestigung nach einem der Ansprüche 7 bis 10, dadurch gekennzeichnet, daß das integrierte Spannglied (18) im Bereich des Rasthakens (30) angeordnet ist.

12. Verdeckbestigung nach einem der Ansprüche 7 bis 11, dadurch gekennzeichnet, daß das Spannglied(18) als eine vollständig in die Kunststoffleiste eingeformte Seileinlage ausgebildet ist.

13. Verdeckbefestigung nach einem der Ansprüche 7 bis 12, dadurch gekennzeichnet, daß der Gegenschenkel (27) zum Aufnahmeraum (23) hin gerichtete Stützwülste (31) aufweist.

14. Verdeckbefestigung nach einem der Ansprüche 7 bis 13, dadurch gekennzeichnet, daß der Aufnahmeraum (23) eine Steckkammer (39) zur Aufnahme des Steckschenkels (21) der Klemmleiste (7) aufweist.

15. Verdeckbefestigung nach einem der Ansprüche 7 bis 14, dadurch gekennzeichnet, daß der Deckschenkel (26) mit einem den Gegenschenkel (27) im wesentlichen um das doppelte überragenden Abdeckschutz (32) versehen ist.

16. Verdeckbefestigung nach einem der Ansprüche 7 bis 15, dadurch gekennzeichnet, daß der Abdeckschutz (32) als elastischer Stützbogen ausgebildet ist, dessen Oberseite (33) eine gleichmäßige Wölbung aufweist.

17. Verdeckbefestigung nach Anspruch 7 und einem oder mehreren der Ansprüche 8 bis 16, dadurch gekennzeichnet, daß der Verbindungsspalt (24) zwischen zwei symmetrischen Verbindungsschenkeln (34) gebildet ist, die jeweils innere zueinander parallele Verbindungsflächen (35) aufweisen.

18. Verdeckbefestigung nach Anspruch 17, dadurch gekennzeichnet, daß im Verbindungsspalt (24) der Verdeckstoff (2) mit den Verbindungsschenkeln (34) vernäht ist.

19. Verdeckbefestigung nach Anspruch 18, dadurch gekennzeichnet, daß die Naht (15) zumindest im Bereich des oberen Verbindungsschenkels (34) mit einem Dichtmittel abgedeckt ist.

20. Verdeckbefestigung nach Anspruch 17, dadurch gekennzeichnet, daß der Verdeckstoff (2) mit den Verbindungsflächen (24) verschweißt ist.

21. Verdeckbefestigung nach einem der Ansprüche 17 bis 20, dadurch gekennzeichnet, daß an der Eintrittsstelle des Verdeckstoffes (2) in den Verbindungsspalt (34) eine Dichtungswulst (16), z.B. von einem Schweißkleber, auf dem Verdeckstoff (2) ausgebildet ist.

22. Verdeckbefestigung nach einem der Ansprüche 1 bis 21, dadurch gekennzeichnet, daß der abgesenkte Karosserieschacht (11) für die Befestigung des Verdeckstoffes (2) eine Einlaufschräge (37) bildet, die unterhalb des Kofferdeckels (12) in einer ausgeformten Querrinne (38) des Wasserkanalsblechs (8) endet.

23. Verdeckbefestigung nach Anspruch 22, dadurch gekennzeichnet, daß im Kontaktbereich von Verdeckstoff (2) und Kofferdeckelrand (4) eine reibungsarme Karosserieabschlußdichtung (13) angeordnet ist.

24. Verdeckbefestigung nach Anspruch 21 und 22, dadurch gekennzeichnet, daß das Wasserkanalblech(8) mit einer den Karosserieschacht(11) begrenzenden hinteren Kofferdeckeldichtung (14) verbunden ist.

## Claims

1. A hood fixing on cabriolet vehicles with, disposed at least in the rear part of the vehicle (1), and on the bodywork, a mounting recess in which the rim of the hood material (2) is held by a clamping member (18), characterised in that a clamping strip (7) on the body and which incorporates a mounting recess and a clamping profile (6) connected in waterproof manner to the hood material (2) and comprising an integrated clamping member (18) are disposed in a mutually clamped connected position in a well (11) in the bodywork which is masked by body parts (4, 5).

2. A hood fixing according to Claim 1, characterised in that the clamping strip (7) consists of a one-piece profiled plate of a cross-section which comprises a plane base member (19) which can be fixed on at least one retaining plate (8, 9) of the bodywork and, extending from the edge of the base member (19) and bent back inwardly onto the base member (19), a member (21, 22) which forms a catch means.

3. A hood fixing according to Claim 1 and 2, characterised in that the clamping strip (7) comprises, parallel with the base member (19) in a main longitudinal plane (20), a front double-layer push-in member (21) and a catch member (22) adjacent to it and bent over at an acute angle to the main longitudinal plane (20).

4. A hood fixing according to Claim 3, characterised in that the catch member (22) is double-layered.

5. A hood fixing according to Claim 1 to 4, characterised in that the base member (19) of the clamping strip (7) is supported between parallel end portions of a gutter profile (8) and a hood cavity (9) constructed in the bodywork.

6. A hood fixing according to Claim 5, characterised in that there is in the fixing area under the hood well (9) an additional profiled reinforcing plate (17) which engages under the clamping strip (7).

7. A hood fixing according to one of Claims 1 to 6, characterised in that the clamping profile (6) consists of a one-piece resilient synthetic plastics strip having a cross-sectional form vertical in relation to a central main longitudinal plane (25) and which has at one end, directed towards the clamping strip (7), an accommodating space (23) and at the other a connecting gap (24) which secures the rim (2) of the hood.

8. A hood fixing according to Claim 7, characterised in that the accommodating space (23) formed on both sides of the main longitudinal plane (25) is bounded by an upper masking member (26) and a lower mating member (27).

9. A hood fixing according to Claim 7 or 8, characterised in that there is formed into the masking member (26) a catch hook (30) which forms a housing pocket (28) to receive the catch (22) on the clamping strip (7).

10. A hood fixing according to one of Claims 7 to 9, characterised in that the catch hook (30) offers a bearing surface (29) which is inclined at an acute angle to the main longitudinal plane (25).

11. A hood fixing according to one of Claims 7 to 10, characterised in that the integrated clamping member (18) is disposed in the region of the catch hook (30).

12. A hood fixing according to one of Claims 7 to 11, characterised in that the clamping member (18) is constructed as a cord inlay which is completely moulded into the synthetic plastics strip.

13. A hood fixing according to one of Claims 8 to 12. characterised in that the mating member (27) comprises bracing beads (31) directed towards the accommodating space (23).

14. A hood fixing according to one of Claims 7 to 13, characterised in that the accommodating space (23) comprises a push-in chamber (39) to accommodate the push-in member (21) of the clamping strip (7).

15. A hood fixing according to one of Claims 7 to 14, characterised in that the masking member (26) is provided with a protective portion (32) which projects beyond the mating member (27) by substantially twice the size of this latter.

16. A hood fixing according to one of Claims 7 to 15, characterised in that the protective member (32) is constructed as a resilient curved bracing member the top (33) of which has a regular curvature.

17. A hood fixing according to Claim 7 and one or more of Claims 8 to 16, characterised in that the connecting gap (24) is formed between two symmetrical connecting arms (34) having mutually parallel inner connecting surfaces (35).

18. A hood fixing according to Claim 17, characterised in that in the connecting gap (24), the hood material (2) is sewn to the connecting arms (34).

19. A hood fixing according to Claim 18, characterised in that the seam is covered by a sealing means at least in the region of the upper connecting arm (34).

20. A hood fixing according to Claim 17, characterised in that the hood material (2) is welded to the connecting surfaces (24).

21. A hood fixing according to one of Claims 17 to 20, characterised in that at the place where the hood material (2) enters the connecting gap (34) a sealing bead (16) is constructed on the hood material (2), for instance by using a welding adhesive.

22. A hood fixing according to one of Claims 1 to 21, characterised in that the lowered bodywork well (11) for fixing the hood material (2) forms a sloping inlet surface (37) which ends beneath the boot lid (12) in a shaped transverse channel (38) in the gutter plate (8).

23. A hood fixing according to Claim 22, characterised in that there is a low-friction body sealing gasket (13) in the area in which the hood material (2) and the edge (4) of the boot lid are in contact.

24. A hood fixing according to Claim 21 and 22, characterised in that the gutter (8) is connected to a rear boot lid gasket (14) bounding the bodywork well (11).

## Revendications

1. Fixation de capote pour cabriolet avec une forme de fixation saillante disposée au moins dans la partie postérieure du véhicule (1) sur la carrosserie, dans laquelle le tissu de la capote (2) est reçu dans la zone de sa bordure par un organe de tension (18), fixation de capote caractérisée en ce qu'un bandeau de serrage de carrosserie (7) présentant la forme de fixation saillante et un profilé de serrage (6) relié, de façon étanche à l'eau, au tissu de la capote (2) avec un organe de tension intégré (18), sont disposés dans une position de liaison où ils sont tendus l'un contre l'autre dans un puits pratiqué dans la carrosserie (11) et recouvert par des parties de la carrosserie (4, 5).

2. Fixation de capote selon la revendication 1, caractérisée en ce que le bandeau de serrage (7) consiste en une tôle profilée d'une seule pièce avec une forme comprenant, en section transversale, une branche de base plane (19) qui peut être fixée sur au moins une tôle de fixation (8, 9) de la carrosserie, et une branche (21, 22) partant de la branche de base (19) du côté du bord, en étant repliée en dedans sur la branche de base (19) pour former un appendice d'encliquetage.

3. Fixation de capote selon les revendications 1 et 2, caractérisée en ce que le bandeau de serrage (7) présente, dans un plan principal longitudinal (20) parallèle à la branche de base (19), une branche d'enfoncement antérieure (21) constituée de deux couches et, s'y raccordant, un nez d'encliquetage (22) formant un angle aigu par rapport au plan principal longitudinal (20).

4. Fixation de capote selon la revendication 3, caractérisée en ce que le nez d'encliquetage (22) est formé en saillie avec deux couches.

5. Fixation de capote selon les revendications 1 à 4, caractérisée en ce que la branche de base (19) du bandeau de serrage (7) est maintenue entre des zones terminales parallèles d'un profilé (8) formant un canal pour l'eau et d'une tôle (9) de cuvette de capote.

6. Fixation de capote selon la revendication 5, caractérisée en ce que dans la zone de fixation en dessous de la tôle de cuvette de capote (9), on dispose une tôle profilée de renforcement additionnelle (17) venant en prise sous le bandeau de serrage (7).

7. Fixation de capote selon l'une des revendications 1 à 6, caractérisée en ce que le profilé de serrage (6) consiste en un listeau en matière plastique élastique d'une seule pièce avec une forme de section transversale verticale par rapport à un plan longitudinal principal médian (25), forme qui présente d'une part une chambre de réception (23) orientée vers le bandeau de serrage (7), et d'autre part une fente de liaison (24) fixant le bord du tissu de la capote (2).

8. Fixation de capote selon la revendication 7, caractérisée en ce que la chambre de réception (23) formée des deux côtés du plan longitudinal principal (25) est limitée par une aile supérieure de couverture (26) et une aile inférieure opposée (27).

9. Fixation de capote selon la revendication 7 ou 8, caractérisée en ce que sur l'aile de couverture (26) est formé un crochet d'encliquetage (30) constituant une poche réceptrice (28) pour le nez d'encliquetage (22) du bandeau de serrage (7).

10. Fixation de capote selon l'une des revendications 7 à 9, caractérisée en ce que le crochet d'encliquetage (30) présente une surface d'appui (29) qui forme un angle aigu par rapport au plan longitudinal principal (25).

11. Fixation de capote selon l'une des revendications 7 à 10, caractérisée en ce que l'organe de serrage intégré (18) est disposé dans la zone du crochet d'encliquetage.

12. Fixation de capote selon l'une des revendications 7 à 11, caractérisée en ce que l'organe de tension (18) est constitué sous la forme d'un câble complètement moulé dans le bandeau en matière plastique.

13. Fixation de capote selon l'une des revendications 7 à 12, caractérisée en ce que l'aile opposée (27) présente un bourrelet d'appui (31) dirigé vers la chambre réceptrice (23).

14. Fixation de capote selon l'une des revendications 7 à 13, caractérisée en ce que la chambre réceptrice (23) présente une chambre d'enfichage (39) pour recevoir la branche d'enfoncement (21) du bandeau de serrage (7) .

15. Fixation de capote selon l'une des revendications 7 à 14, caractérisée en ce que l'aile de couverture (26) est pourvue d'un couvercle de protection (32) faisant saillie au double de celle-ci.

16. Fixation de capote selon l'une des revendications 7 à 15, caractérisée en ce que le couvercle de protection (32) est constitué sous la forme d'un arc-boutant élastique dont la face supérieure (33) présente une courbure régulière.

17. Fixation de capote selon la revendication 7 et l'une ou plusieurs des revendications 8 à 16, caractérisée en ce que la fente de liaison (24) est formée entre deux branches de liaison symétriques (34), qui présentent respectivement des surfaces de liaison internes parallèles l'une à l'autre.

18. Fixation de capote selon la revendication 17, caractérisée en ce que, dans la fente de liaison (24) on coud le tissu de la capote (2) avec les branches de liaison (34).

19. Fixation de capote selon la revendication 18, caractérisée en ce que la couture (15) est recouverte, au moins dans la zone de la branche de liaison supérieure (34), par un moyen d'étanchéité.

20. Fixation de capote selon la revendication 17, caractérisée en ce que le tissu de la capote (2) est soudé avec les surfaces de liaison (24).

21. Fixation de capote selon l'une des revendications 17 à 20, caractérisée en ce qu'à l'entrée du tissu de la capote (2) dans la fente de liaison (34), on constitue un bourrelet d'étanchéité (16) par exemple au moyen d'une colle de soudage sur le tissu de la capote (2).

22. Fixation de capote selon l'une des revendications 1 à 21, caractérisée en ce que le puits de la carrosserie (11) abaissé pour la fixation du tissu de la capote (2), forme une déclivité (37) qui se termine en dessous du couvercle du coffre (12) dans une gouttière transversale (38) formée à partir de la tôle (8), qui constitue un canal pour l'eau.

23. Fixation de capote selon la revendication 22, caractérisée en ce que, dans la zone de contact du tissu de la capote (2) avec le bord du couvercle de coffre (4), est disposé un joint d'étanchéité (13) assurant la fermeture de la carrosserie et présentant un faible frottement.

24. Fixation de capote selon les revendications 21 et 22, caractérisée en ce que la tôle (8) formant un canal pour l'eau est reliée à un joint d'étanchéité (14) du couvercle de coffre postérieur délimitant le puits de la carrosserie (11).
